# DEMANDE DE BREVET EUROPEEN

(11) **EP 0 813 823 A1**
(43) Date de publication de la demande: **29.12.1997**
(21) Numéro de dépôt: 97401444.1
(22) Date de dépôt: 20.06.1997
(51) Int. Cl.: A42C 2/00, A42B 3/04

(54) **Procédé et dispositif de personnalisation de casque à optique de vision nocturne**

(30) Priorité: 21.06.1996 FR 9607753
(71) Demandeur: SEXTANT AVIONIQUE, F-78140 Velizy (FR)
(72) Inventeur: Bataille, Alexandre, 94117 Arcueil Cedex (FR)
(74) Mandataire: Chaverneff, Vladimir

(57) **Abrégé**

Le procédé de l'invention assure le positionnement précis du dispositif de vision nocturne par rapport au casque sur lequel il doit être fixé, afin que l'utilisateur soit dans des conditions optimales de vision.

Il consiste à déterminer la position du support (8) du dispositif par rapport à des points significatifs de la tête de l'utilisateur, en contact avec le casque (C), puis à recopier sur un outil-support (16) portant le casque (C) et le support (8) du dispositif de vision ces positions relatives, et à former des cales d'épaisseur (46) entre le casque (C) et le support (16).

## Description

La présente invention se rapporte à un procédé et à un dispositif de personnalisation de casque à dispositif optique de vision nocturne.

Les casques de pilotes d'avions militaires devant effectuer des missions nocturnes sont munis de dispositifs de vision nocturne à intensificateurs électroniques de lumière. Les premiers dispositifs de vision nocturne fixés à ces casques étaient du type "jumelle", relativement encombrants. Ils ont fait place à des dispositifs moins encombrants du type "lunette" à trajet optique replié.

Ces dispositifs de vision nocturne doivent être adaptés à la vision de chaque utilisateur, et leurs réglages sont limités et relativement complexes à mettre en oeuvre, en particulier du fait que la taille de leur pupille est relativement faible (10 à 15 mm de diamètre, en général), ce qui oblige à effectuer un positionnement précis de leurs oculaires par rapport aux pupilles des yeux du pilote.

Or, ces dispositifs de vision nocturne sont liés au casque, et la position de celui-ci par rapport à la tête du pilote est très peu précise, même dans le cas où l'on munit le casque d'éléments de confort et de personnalisation (en général, injection de mousse entre la coque interne et la tête de l'utilisateur ). De plus, la géométrie même du casque ne permet pas d'obtenir un positionnement précis de la coque interne par rapport au socle de fixation du dispositif de vision nocturne, qui est fixé sur la coque externe.

Pour résoudre ces problèmes de positionnements relatifs entre, d'une part, la tête du pilote et la coque interne, et, d'autre part, entre la coque interne et la coque externe, on pourrait prévoir l'ajout de différents dispositifs de réglage suivant les différents degrés de liberté (distance interpupillaire et orientation géométrique avec des courses importantes pour rattraper les différentes erreurs de positionnement et tolérances de fabrication). De telles solutions présentent deux inconvénients importants: d'une part la masse importante de ces dispositifs de réglage, et d'autre part, dans le cas de l'utilisation de lunettes de vision nocturne, les disparités de position du module optique de ces lunettes par rapport au casque se répercutent dans la position relative entre ces lunettes et la visière, liée au casque, qui doit pouvoir passer devant ces lunettes sans les accrocher. Il en résulte que ces solutions mènent à une complexité accrue du mécanisme d'articulation de la visière et/ou à un encombrement plus important du casque.

La présente invention a pour objet un procédé permettant de positionner de façon précise le système optique d'un dispositif de vision nocturne de casque , et en particulier sa pupille, par rapport aux yeux de l'utilisateur, dispositif qui soit simple à mettre en oeuvre, et qui ne complique ni n'alourdisse pratiquement pas le casque. La présente invention a également pour objet un dispositif de mise en oeuvre de ce procédé.

Le procédé conforme à l'invention consiste, après avoir positionné l'oeil de L'utilisateur par rapport à des zones de référence de la surface interne du casque, à recopier sur un outil-support ces zones de référence, le casque étant disposé sur ces zones dans une position correspondant à celle qu'il aurait sur la tête de l'utilisateur, puis à fixer sur l'outil-support le support de fixation du dispositif de vision nocturne dans une position correspondant à ladite position de l'oeil par rapport aux zones de référence, et à former une cale d'épaisseur entre le support du dispositif de vision nocturne et la coque extérieure du casque.

Le dispositif conforme à l'invention comporte un banc de mesure comprenant des moyens de support réglables pour le casque, des butées réglables recopiant les positions relatives de zones de référence correspondant à des points d'appui particuliers de la surface interne du casque sur la tête de l'utilisateur, et un élément de fixation réglable du support de l'optique de vision nocturne.

La présente invention sera mieux comprise à la lecture de la description détaillée d'un mode de réalisation, pris à titre d'exemple non limitatif et illustré par le dessin annexé, sur lequel :
- la figure 1 est une vue en perspective d'un banc de mesure, conforme à l'invention, montrant les moyens de positionnement de la coque interne du casque, sans l'élément de fixation réglable du support de l'optique de vision nocturne, et
- la figure 2 est une vue du banc de la figure 1 avec l'élément de fixation réglable du support de l'optique de vision nocturne.

Tout d'abord, on positionne, de façon connue en soi (par exemple sur un banc optique de personnalisation de casques), l'oeil de l'utilisateur par rapport à la surface interne du casque. En pratique, il suffit de quatre zones de référence de cette surface interne pour la définir dans le cadre de l'invention. Ces quatre zones de référence sont par exemple celles correspondant au sommet du crâne de l'utilisateur, et à trois zones du bord antérieur du casque ( sommet de ce bord et les deux zones en vis-à-vis des tempes de l'utilisateur), par exemple.

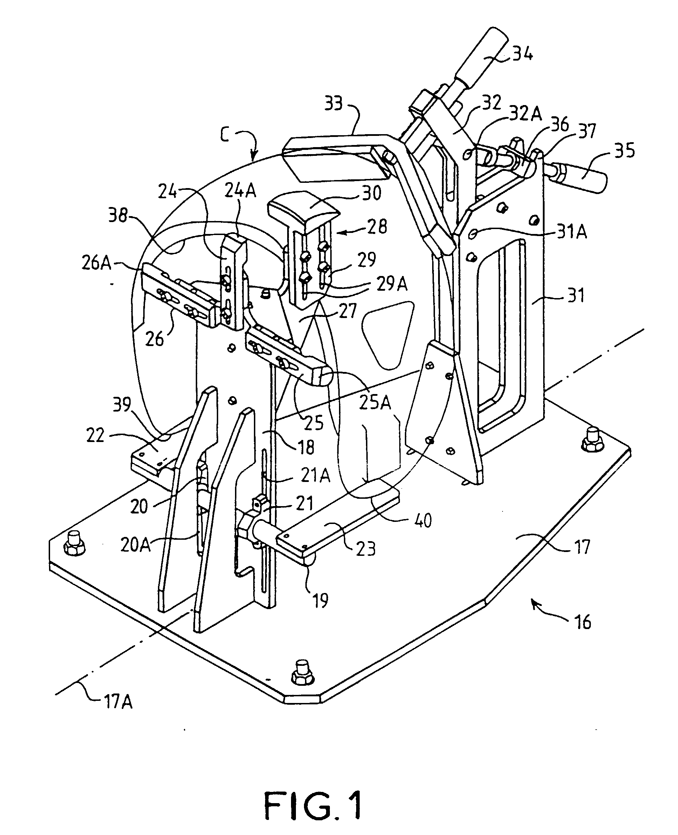

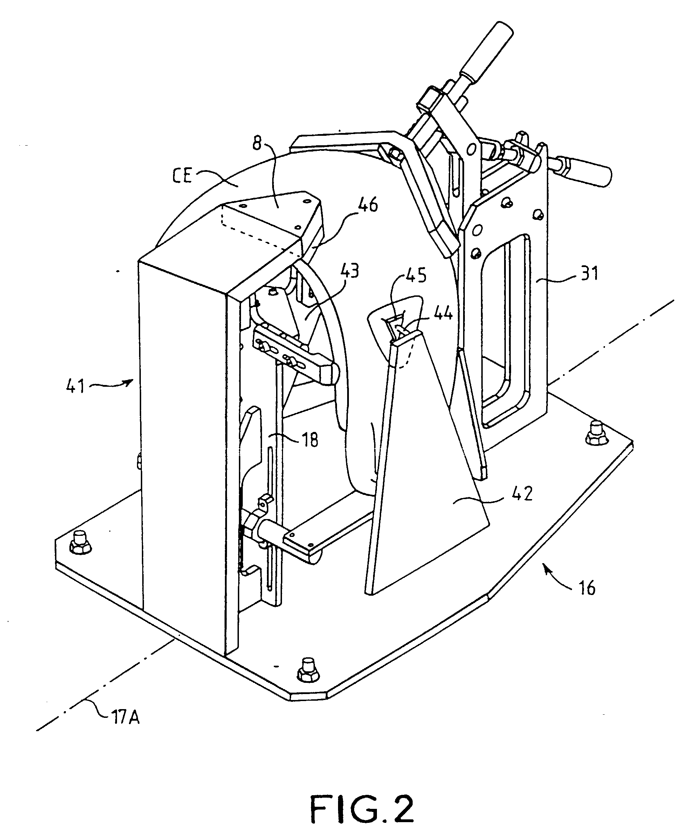

On a représenté sur les figures 1 et 2 le banc de mesure 16 de l'invention, permettant de fixer les positions relatives du dispositif de vision nocturne et du casque.

En figure 1, le casque C est supposé transparent pour simplifier le dessin, étant bien entendu que lors de l'utilisation du banc 16, le casque est entier, ses deux coques étant fixées définitivement l'une à l'autre.

L'axe de symétrie longitudinal du socle 17 du banc 16 est référencé 17A. Cet axe est parallèle à l'axe longitudinal du casque lorsqu'il est en place sur le banc 16. On fixe sur le socle 17, à sa partie antérieure, une équerre 18, sensiblement perpendiculaire à ce socle et symétrique par rapport à l'axe 17A. On fixe sur l'équerre 18, près de sa base, une tige 19, perpendiculaire à l'axe 17A et symétrique par rapport à celui-ci. La tige 19 est fixée sur l'équerre 18 par l'intermédiaire de colliers 20, 21 dont les vis de fixation sur l'équerre 18 peuvent se déplacer dans des boutonnières 20A, 21A pratiquées dans l'équerre 18, perpendiculairement au socle 17. On fixe sur la tige 19, symétriquement par rapport à l'axe 17A, des planchettes 22, 23 dont la position de repos est sensiblement horizontale. Ces planchettes 22, 23 sont fixées par une de leurs extrémités sur la tige 19 et dirigées vers la partie postérieure du socle 17.

A la partie supérieure de l'équerre 18, on fixe trois tiges 24, 25 et 26 à section rectangulaire. Ces trois tiges comportent des boutonnières longitudinales par lesquelles passent leurs vis de fixation, permettant ainsi de les positionner longitudinalement. La tige 24 est perpendiculaire au socle 17 et son axe longitudinal intersecte l'axe 17A. Les tiges 25, 26 sont fixées parallèlement au socle 17 et symétriquement par rapport à l'axe 17A.

Sur la face postérieure de l'équerre 18, à sa partie supérieure, on fixe une petite équerre 27, perpendiculaire à la surface de l'équerre 18 et parallèle à l'axe 17A. Sur cette équerre 27 on fixe un pied 28 se composant d'une plaque 29 et d'une semelle 30 sensiblement perpendiculaire à la plaque 29. La plaque 29 comporte des boutonnières longitudinales 29A dans lesquelles passent des vis de fixation, ce qui permet de régler sa hauteur de fixation par rapport au socle 17. La surface supérieure de la semelle 30 est convexe et sa forme correspond à la forme de la surface intérieure de la coque intérieure du casque prenant appui sur cette surface.

A l'arrière du socle 17, on fixe une équerre ou pied support 31 supportant un bras 32 dirigé vers le haut et articulé par rapport au support 31 autour d'une axe 31A parallèle au socle 17 et perpendiculaire à l'axe 17A. Le plan de symétrie du bras 32 passe par l'axe 17A. Le bras 32 porte une chape en "V" 33, symétrique par rapport au plan de symétrie du bras 32 et dont la distance par rapport au bras est réglable à l'aide d'une vis 34 reliant la chape au bras. Une extrémité d'une vis de réglage 35 est reliée au bras 32 à peu près au milieu de ce bras par une liaison articulée 32A, la vis 35 portant près de son autre extrémité une butée 36 se vissant sur elle et s'appuyant sur une protubérance 37 du support 31. Ainsi, les éléments 35 à 37 forment une butée réglable pour le bras 32 dans sa rotation vers l'arrière du socle 17. La chape 33 s'appuie contre la partie supérieure postérieure du casque lorsqu'il est en place sur l'outil 16, et est destinée à régler sa symétrie par rapport à un plan perpendiculaire au socle 17 et passant par l'axe 17A.

Sur la figure 1, on a représenté le casque en place sur l'outil 16. La chape 33 est basculée en arrière pour permettre la mise en place du casque. La coque interne 38 prend appui sur la semelle 30 (dont l'emplacement correspond sensiblement au sommet du crâne de l'utilisateur) et sur les faces frontales des extrémités des tiges 24 à 26 (qui sont en contact avec le bord antérieur de la coque 38). Les extrémités inférieures 39, 40 du casque s'appuient sur les extrémités libres des planchettes 22, 23 qui permettent d'effectuer un réglage en rotation en roulis (autour d'un axe sensiblement parallèle à l'axe 17A) du casque.

Les emplacements des surfaces frontales 24A à 26A des tiges 24 à 26 sont réglés pour correspondre auxdites zones de référence du bord antérieur de la coque interne du casque

Le casque étant en appui sur les surfaces 24A à 26A et 30, on règle la position des planchettes 22 et 23 pour que les extrémités 39 et 40 du casque soient dans le même plan horizontal, sans que le casque perde le contact avec les surfaces 24A à 26A et 30. Le réglage de la position de la chape 33 permet d'affiner le réglage de la symétrie du casque par rapport à un plan vertical passant par l'axe 17A, son réglage se faisant après celui des planchettes 22, 23.

La position du casque C étant réglée par rapport aux surfaces de référence (24A à 26A, 30), on peut estimer qu'elle est pratiquement la même que la position correcte du casque sur la tête de l'utilisateur. On peut alors mettre en place sur le casque le support de fixation 8 du dispositif de vision nocturne (non représenté) dans sa position optimale. En effet, on connaît de la façon la plus exacte possible les positions spatiales respectives de la tête de l'utilisateur et du dispositif de vision nocturne, et en particulier du support de fixation 8 de ce dispositif. Le casque étant en contact avec la tête de l'utilisateur au moins dans les zones caractéristiques représentées par les surfaces 12, 13, 15 et 15A, on en déduit les positions spatiales respectives du casque et du dispositif de vision nocturne. Par conséquent, il suffit de fixer sur le banc 16 le dispositif de vision nocturne dans la même position spatiale par rapport aux surfaces 24A à 26A et 30 qu'il occupait sur le banc 1 par rapport aux surfaces 12, 13, 15 et 15A, afin qu'il soit correctement positionné par rapport au casque et donc par rapport aux yeux de l'utilisateur.

Pour disposer le support 8 sur le banc 16, on fixe sur le socle 17 une potence 41 devant l'équerre 18, symétriquement par rapport à l'axe 17A. Cette potence 41 comporte des moyens de réglage (non représentés) permettant d'ajuster la position spatiale du support 8 qu'elle porte à son extrémité. On a également représenté en figure 2 deux plaques 42, 43 fixées sur le socle 17, perpendiculairement à celui-ci, encadrant latéralement le casque, symétriquement par rapport à l'axe 17A, à une faible distance du casque. Ces plaques 42, 43 portent chacune une courte tige réglable supportant une petite surface appliquée sur le côté correspondant du casque, à peu près au niveau des oreilles de l'utilisateur. Sur la figure 2, seules sont visibles la tige 44 et la surface 45 relatives à la plaque 42 (correspondant au côté gauche du casque). Lorsque la position du casque sur le banc 16 a été bien ajustée, comme décrit ci-dessus, on applique la surface 45 et son homologue de droite contre le casque pour bien le maintenir en place. La position du support 8 était également bien ajustée, on a constaté que, pour une série de casques, étant données les tolérances de fabrication et les tolérances de positionnement de la coque intérieure par rapport à la coque extérieure, le support 8 était généralement situé à une distance variable de la coque extérieure CE du casque (quelques millimètres). Par conséquent, selon l'invention, on insère entre le support 8 et la coque extérieure du casque une ou plusieurs cales 46 dont l'épaisseur correspond à ladite distance variable. Cette cale peut être métallique ou en matière plastique suffisamment dure pour ne pas être écrasée lors de la fixation du support 8. Lorsque la cale 46 est en place, on procède à la fixation de ce support 8, par exemple à l'aide de trois vis, comme montré en figure 2. Bien entendu, au lieu d'utiliser une seule cale 46 dont il faut ajuster l'épaisseur par usinage, on peut utiliser plusieurs cales plus fines choisies dans un jeu de cales de différentes épaisseurs assorties.

## Revendications

1. Procédé de positionnement précis du système optique d'un dispositif de vision nocturne par rapport aux yeux de l'utilisateur, caractérisé en ce qu'il consiste, après avoir positionné l'oeil de l'utilisateur par rapport à des zones de référence de la surface interne du casque, à recopier sur un outil-support (16) ces zones de référence (24A à 26A, 30), le casque étant disposé sur ces zones dans une position correspondant à celle qu'il aurait sur la tête de l'utilisateur, puis à fixer sur l'outil-support le support de fixation (8) du dispositif de vision nocturne dans une position correspondant à ladite position de l'oeil par rapport aux zones de référence, et à former une cale d'épaisseur (46) entre le support de fixation du dispositif de vision nocturne et la coque extérieure du casque (CE).

2. Procédé selon la revendication 1, caractérisé en ce que les zones de référence sont celles du bord antérieur de la coque interne du casque, ainsi que celle en contact avec le sommet du crâne de l'utilisateur.

3. Procédé selon la revendication 1 ou 2, caractérisé en ce que l'on règle sur l'outil-support (16) la symétrie de position du casque (33, 45).

4. Procédé selon l'une des revendications précédentes, caractérisé en ce que l'on règle sur l'outil-support la rotation en roulis (22, 23) du casque.

5. Dispositif de positionnement précis du système optique d'un dispositif de vision nocturne d'un dispositif de vision nocturne de casque (C) par rapport aux yeux de l'utilisateur, caractérisé en ce qu'il comporte un banc de mesure (16) comprenant des moyens de support réglables (18, 22, 23)
pour le casque, des butées réglables (24 à 26, 28) recopiant les positions desdites surfaces d'appui, et un élément de fixation réglable (41) du support de l'optique de vision nocturne.

6. Dispositif selon la revendication 5, caractérisé en ce qu'il comporte des moyens réglables (22, 23) supportant les extrémités inférieures latérales du casque (39, 40).

7. Dispositif selon la revendication 5 ou 6, caractérisé en ce qu'il comporte une chape (33) en "V" symétrique par rapport au plan de symétrie du second banc, appliquée contre la coque extérieure (CE) du casque, près de son sommet, pour en régler la symétrie de positionnement.
